# FASCICULE DE BREVET EUROPEEN

(11) **EP 2 520 387 B1**
(45) Date de publication et mention de la délivrance du brevet: **21.06.2017**
(21) Numéro de dépôt: 12165968.4
(22) Date de dépôt: 27.04.2012
(51) Int. Cl.: B22F 1/00, B22F 9/24, B82Y 30/00, B22F 1/02

(54) **COMPOSITION POUR LA SYNTHÈSE DE NANOPARTICULES BIMÉTALLIQUES DANS UN LIQUIDE IONIQUE ET PROCÉDÉ ASSOCIÉ**
ZUSAMMENSETZUNG FÜR DIE SYNTHESE VON BIMETALLISCHEN NANOPARTIKELN IN EINER IONISCHEN FLÜSSIGKEIT, UND ENTSPRECHENDES VERFAHREN
COMPOSITION FOR SYNTHESISING BIMETALLIC NANOPARTICLES IN AN IONIC LIQUID AND ASSOCIATED METHOD

(30) Priorité: 02.05.2011 FR 1153743
(43) Date de publication de la demande: 07.11.2012
(73) Titulaire: Commissariat à l'Énergie Atomique et aux Énergies Alternatives, 75015 Paris (FR); Centre National de la Recherche Scientifique, 75016 Paris (FR); Université Claude Bernard Lyon I, 69622 Villeurbanne Cedex (FR); CPE Lyon, 69616 Villeurbanne Cedex (FR)
(72) Inventeur: Arquilliere, Philippe, 69100 Villeurbanne (FR); Haumesser, Paul-Henri, 38500 Saint Cassien (FR); Helgadottir, Inga, 69006 Lyon (FR); Santini, Catherine, 69660 Collonges Mont d'Or (FR)
(74) Mandataire: Brizio Delaporte, Allison

(56) Documents cités:
- VINODGOPAL K ET AL: "Sonochemically prepared platinum-ruthenium bimetallic nanoparticles", JOURNAL OF PHYSICAL CHEMISTRY B 20060309 AMERICAN CHEMICAL SOCIETY US, vol. 110, no. 9, 9 mars 2006 (2006-03-09), pages 3849-3852, XP002664994, DOI: DOI:10.1021/JP060203V
- RACHIERO G P ET AL: "Bimetallic RuCo and RuCu catalysts supported on [gamma]-Al 2O3. A comparative study of their activity in hydrolysis of ammonia-borane", INTERNATIONAL JOURNAL OF HYDROGEN ENERGY JUNE 2011 ELSEVIER LTD GBR, vol. 36, no. 12, 8 avril 2011 (2011-04-08) , pages 7051-7065, XP002664995, DOI: DOI:10.1016/J.IJHYDENE.2011.03.009
- SALAS G ET AL: "Influence of amines on the size control of in situ synthesized ruthenium nanoparticles in imidazolium ionic liquids", DALTON TRANSACTIONS 20110507 ROYAL SOCIETY OF CHEMISTRY GBR, vol. 40, no. 17, 18 mars 2011 (2011-03-18) , pages 4660-4668, XP002664996, DOI: DOI:10.1039/C0DT00596G

## Description

La présente invention concerne une composition pour la synthèse de nanoparticules bimétalliques dans un liquide ionique et un procédé associé.

Les nanoparticules sont des particules ayant des dimensions nanométriques.

Les nanoparticules peuvent être utilisées dans divers domaines et tout particulièrement dans les domaines de la catalyse et de la micro-électronique.

### ETAT DE LA TECHNIQUE

On connaît, depuis de nombreuses années, des nanoparticules métalliques formées à partir d'un seul métal. Ces nanoparticules monométalliques présentent des propriétés différentes des propriétés du métal à partir duquel elles sont fabriquées. Ceci est notamment dû à leur surface très étendue relativement à leur volume. La synthèse des nanoparticules monométalliques s'est développée pour permettre un contrôle de la taille et une stabilisation efficace évitant l'agglomération des nanoparticules.

Les nanoparticules bimétalliques sont apparues par la suite et prennent de plus en plus d'importance face aux nanoparticules monométalliques grâce à leurs nouvelles propriétés. Les propriétés des nanoparticules bimétalliques ne résultent pas uniquement de la combinaison des propriétés des deux métaux mais d'une synergie. Les nanoparticules bimétalliques présentent une structure de surface dépendante de la composition et de la ségrégation atomique.

Toutefois, la préparation de ces nanoparticules bimétalliques est beaucoup plus complexe que celle des monométalliques. Le contrôle de la taille, de la morphologie, de la composition, de la structure ou encore de la stabilité est essentiel pour obtenir des nanoparticules ayant des propriétés intéressantes mais implique des procédés particuliers.

La synthèse des nanoparticules bimétalliques se fait à l'état solide par procédé mécanique, à l'état gazeux par dépôt en phase vapeur ou à l'état de solution par procédé chimique. Les procédés à l'état solide nécessitent de très hautes températures pour fusionner les deux types de métaux. A l'état gazeux, les procédés utilisent des appareils complexes et les quantités produites restent très limitées. Les procédés de préparation en solution sont nettement moins coûteux en matériel et en temps.

Des procédés de synthèse de nanoparticules bimétalliques en solution sont déjà décrits. Cependant aucun ne permet d'obtenir des particules de tailles satisfaisantes tout en étant stables.

La publication Vinodgopal K et AL intitulée "Sonochemically prepared platinum-ruthenium bimetallic nanoparticles" publiée au "Journal of Physical Chemistry" B2006 03 09 AMERICAN CHEMICAL SOCIETY US, vol. 110, no. 9, 9 mars 2006, pages 3849-3852 présente une préparation particulière de nanoparticules bimétallique Platine-Ruthenium. Une synthèse de nanoparticules à géométrie coeur-coquille est présentée.

La publication Rachiero G.P et Al intitulée "Bimetallic RuCo and RuCu catalysts supported on [gamma]-AI 203. A comparative study of their activity in hydrolysis of ammonia-borane" publiée au "International Journal of Hydrogen Energy" Juin 2011, Elsevier LTD GBR, vol.36, no.12, le 8 avril 2011, pages 7051-7065, montre des particules nanométriques contenant du Ruthénium et ayant une forme sphérique. Ces nanoparticules sont bimétalliques.

### EXPOSE DE L'INVENTION

La présente invention propose à cet effet, un procédé de synthèse de nanoparticules bimétalliques et une composition associée.

L'invention permet la synthèse des nanoparticules bimétalliques à partir d'au moins deux précurseurs organométalliques, OM1 et OM2, dans une solution de liquide ionique. Les deux précurseurs organométalliques, OM1 et OM2, sont choisis de sorte à avoir une vitesse de décomposition différente. La solution de liquide ionique comprenant les deux précurseurs organométalliques est soumise à une étape de transformation sous pression de dihydrogène, à une température comprise entre 0°C et 150°C selon la nature du liquide ionique et des précurseurs organométalliques.

Il a été constaté par le demandeur, de manière surprenante, qu'un contrôle de la taille des nanoparticules est obtenu en fonction du choix des précurseurs organométalliques et en fonction de leur vitesse de décomposition.

Un liquide ionique est un sel ou un mélange de sels constitué(s) d'un cation organique associé à un anion organique ou inorganique. Le liquide ionique est traditionnellement choisi pour être liquide à température ambiante. Ces composés présentent pour la plupart une structuration tridimensionnelle sous la forme d'un réseau ionique qui isole des poches apolaires résultant de la ségrégation des groupements organiques portés par le cation. Le liquide ionique sert donc de matrice pour la synthèse des nanoparticules bimétalliques et joue un rôle essentiel dans le contrôle de la taille des nanoparticules. De manière avantageuse, les liquides ioniques permettent également d'obtenir des nanoparticules métalliques sans espèces parasitaires à la surface.

Avantageusement, l'association d'un liquide ionique avec au moins deux précurseurs organométalliques, OM1 et OM2, permet la synthèse de nanoparticules bimétalliques dont la taille et la structure de surface sont contrôlées. Selon l'invention, la surface des nanoparticules bimétalliques obtenues est nue, c'est-à-dire qu'elle est constituée uniquement d'atomes de métal. Les nanoparticules bimétalliques ne comprennent pas d'impuretés liées à des stabilisants éventuels ou aux parties organiques des précurseurs ou du liquide ionique.

D'autres avantages apparaîtront au cours de la description qui suit de l'invention.

Il convient tout d'abord de rappeler que l'invention concerne une composition pour la synthèse de nanoparticules bimétalliques caractérisée en ce qu'elle est comprend un premier précurseur organométallique et un deuxième précurseur organométallique et une solution de liquide ionique contenant lesdits premier et deuxième précurseurs, le premier et le deuxième précurseurs organométalliques étant choisis de sorte à avoir des vitesses de décomposition différentes.

Suivant des variantes préférées mais non limitatives de l'invention, la composition est telle que :
- un rapport des vitesses est au moins égal à 2,
- elle ne comprend pas de stabilisant,
- elle est constituée d'un premier précurseur organométallique et d'un deuxième précurseur organométallique et d'une solution de liquide ionique contenant le premier et le deuxième précurseur,
- le premier précurseur organométallique et le deuxième précurseur organométallique sont différents et comprennent un métal choisis parmi :
   Ruthénium (Ru), Tantale (Ta), Cuivre (Cu), Nickel (Ni), Manganèse (Mn),
   Platine (Pt),
- la quantité du deuxième précurseur organométallique est comprise entre 0,5 et 5% de la quantité du premier précurseur organométallique,
- le liquide ionique est choisi parmi (C₁C₄ImNTf₂), (C₁C₆ImNTf₂), ou (C₁C₈ImNTf₂),
- le liquide ionique est pur.

Un autre objet de l'invention est un procédé de synthèse de nanoparticules bimétalliques caractérisé par le fait qu'il comprend une étape de transformation, sous pression de dihydrogène, d'une composition pour la synthèse de nanoparticules bimétalliques comprenant un premier précurseur organométallique et un deuxième précurseur organométallique et une solution de liquide ionique contenant lesdits premier et deuxième précurseurs, le premier et le deuxième précurseurs organométalliques étant choisis de sorte à avoir des vitesses de décomposition différentes.

Avantageusement l'étape de transformation est effectuée à une température comprise entre 0 et 150°C plus préférentiellement de l'ordre de 100°.

De manière additionnelle ou alternative, l'étape de transformation est effectuée sous pression de dihydrogène comprise entre 0,1 et 10 MPa, préférentiellement de l'ordre de 0,9 MPa.

La durée de l'étape de transformation est comprise entre 0,5 et 72 h, par exemple de l'ordre de 4 heures, jusqu'à l'obtention d'une suspension de nanoparticules bimétalliques.

Avantageusement, l'étape de transformation comprend la décomposition du premier précurseur organométallique en atomes métalliques puis la réduction des atomes métalliques pour former des nuclei et la décomposition du deuxième précurseur organométallique à la surface desdits nuclei.

Un autre objet de l'invention est une suspension de nanoparticules bimétalliques obtenues selon le procédé décrit ci-dessus dans laquelle les nanoparticules bimétalliques synthétisées sont Ruthénium-Tantale ou Ruthénium-Cuivre ou Ruthénium-Platine ou Nickel-Cuivre ou Manganèse-Cuivre qui présentent une structure coeur-coquille et ont une taille comprise entre 2 et 5 nm. Avantageusement, les nanoparticules bimétalliques sont libres de contamination de surface.

### EXPOSE DETAILLE DE MODES DE REALISATIONS PARTICULIERS

Selon l'invention, pour synthétiser des nanoparticules bimétalliques, deux précurseurs organométalliques, OM1 et OM2, sont mis en solution dans un liquide ionique. L'ensemble est placé sous pression de dihydrogène jusqu'à l'apparition des nanoparticules.

Tout d'abord, un liquide ionique possède une faible volatilité et une tension de vapeur très faible contrairement aux solvants organiques volatils ou aux solvants aqueux. Les liquides ioniques sont donc utilisables à des températures beaucoup plus élevées et des pressions beaucoup plus faibles que les solvants organiques volatils.

Avantageusement, le liquide ionique selon l'invention est liquide à température ambiante ou possède un point de fusion inférieur ou égal à 100°C.

Les liquides ioniques sont tout particulièrement avantageux pour la synthèse des nanoparticules bimétalliques car leur structure tridimensionnelle forme une matrice ou un guide pour la croissance des nanoparticules bimétalliques. De plus cette matrice ou ce guide joue également un rôle de stabilisation des nanoparticules synthétisées.

La suspension de nanoparticules bimétalliques obtenue par le procédé selon l'invention est apte à être utilisée pour déposer les nanoparticules bimétalliques sur des substrats technologiques. Il n'y a pas de nécessité de séparer les nanoparticules du liquide ionique. La suspension issue du procédé selon l'invention est directement utilisable.

Le procédé selon l'invention se base sur la décomposition des précurseurs organométalliques par du dihydrogène.

La réaction se produisant au cours de l'étape de transformation du procédé de synthèse selon l'invention comprend tout d'abord la décomposition d'un premier précurseur organométallique OM1 en atome métallique et en hydrocarbure par l'action du dihydrogène. Cette réduction du précurseur organométallique OM1 conduit à la formation de nuclei de métal. Les nuclei sont des particules de métal de tailles comprises entre 1 et 3 nm.

Le deuxième précurseur organométallique OM2 va ensuite se décomposer à la surface des nuclei du premier métal. De manière surprenante, il a été constaté que la réaction du deuxième précurseur organométallique OM2 à la surface des nuclei du premier métal limite la croissance des nuclei conduisant ainsi à des nanoparticules bimétalliques de tailles contrôlées. Les nanoparticules bimétalliques synthétisées par le procédé selon l'invention présentent une taille de l'ordre de 2 à 5 nm. Obtenir une telle taille pour des nanoparticules bimétalliques est particulière intéressant, alors que dans les mêmes conditions de réaction les nanoparticules monométalliques synthétisées présentent une taille bien supérieure, de l'ordre de 6 à 8 nm. La synthèse des nanoparticules monométalliques pour obtenir des tailles inférieures à 5 nm doit être réalisée dans des conditions beaucoup moins favorables en termes de coûts, de durée ou de température.

Ce procédé selon l'invention est possible par le choix des précurseurs organométalliques. En effet, il est important que les deux précurseurs organométalliques aient une vitesse de décomposition différente. De cette manière le précurseur organométallique OM1 avec la vitesse de décomposition la plus grande se décomposera en premier pour former des nuclei. Le métal de ce premier précurseur organométallique OM1 se situe au coeur de la nanoparticule. Le deuxième précurseur organométallique OM2 avec une plus faible vitesse de décomposition réagit à la surface des nuclei. Le métal du deuxième précurseur organométallique OM2 forme une coquille de la nanoparticule.

La structure des nanoparticules bimétalliques obtenues est du type coeur-coquille.

Selon une possibilité, le deuxième précurseur organométallique OM2 peut commencer à se décomposer alors que le premier précurseur organométallique OM1 n'est que partiellement décomposé.

Il est entendu que le premier précurseur organométallique OM1 est celui dont la vitesse de décomposition est la plus grande et le deuxième précurseur organométallique OM2 est celui dont la vitesse de décomposition est la plus faible.

On entend par vitesse de décomposition, le temps que met un précurseur organométallique à se décomposer en un atome métallique et en hydrocarbure dans un liquide ionique sous pression de dihydrogène. La vitesse de décomposition d'un précurseur organométallique peut être mesurée par la réactivité d'un précurseur organométallique lors de la formation des nanoparticules.

Avantageusement, le temps de décomposition de OM1 (tau OM1) est au plus égal à la moitié du temps de décomposition de OM2 (tau OM2). Un rapport des vitesses supérieur ou égal à 2 (tau OM2 / tau OM1 ≥ 2) est préféré. Par exemple, un rapport de l'ordre de 10 est possible. Ces vitesses de décomposition sont ajustables par la modification des conditions de réaction : nature du liquide ionique, nature du ligand associé au précurseur organométallique, état d'oxydation du métal dans le précurseur organométallique, température et pression de dihydrogène.

Les quantités du premier et du deuxième précurseur organométallique sont variables en fonction de la composition finale souhaitée pour les nanoparticules bimétalliques. Préférentiellement, la quantité du deuxième précurseur organométallique OM2 est inférieure à 85% de la quantité du premier précurseur organométallique OM1. Un contrôle de la taille des nanoparticules bimétalliques synthétisées est effectif jusqu'à cette proportion. Après, la taille des nanoparticules bimétalliques n'est plus satisfaisante. Avantageusement, le premier précurseur organométallique OM1 est en excès tandis que le deuxième précurseur organométallique OM2 est limitant. Plus précisément, le deuxième précurseur organométallique OM2 est largement minoritaire. L'effet limitatif de la taille dû au deuxième précurseur organométallique OM2 est constaté pour des quantités de deuxième précurseur organométallique OM2 inférieures à 5%, préférentiellement comprises entre 0,5 et 1%. Ceci présente un avantage certain en question de coût puisque la quantité de métal utilisée est réduite.

De plus, les nanoparticules bimétalliques synthétisées par le présent procédé sont stables. De manière surprenante, la combinaison des effets du liquide ionique, formant une matrice limitant la croissance des nanoparticules et leur agglomération, à la quantité limitante de deuxième précurseur organométallique, bloquant la croissance des nanoparticules et empêchant ensuite leur coalescence, permet d'éviter l'adjonction de stabilisants. L'absence de stabilisant dans la solution de liquide ionique pour la synthèse de nanoparticules bimétalliques selon l'invention permet d'obtenir des nanoparticules bimétalliques libres de toute contamination de surface. Elles peuvent être directement utilisables dans la suspension de liquide ionique.

Selon l'invention, la pureté du liquide ionique est importante. Avantageusement, le liquide ionique est pur. On entend par pur que le liquide ionique présente un degré de pureté élevé, d'au plus 12 ppm en eau et 200 ppm en ions halogénure, notamment en ions chlorure. Les impuretés du liquide ionique peuvent être de différentes sortes : sels organiques de départ, composés volatils, eau, cations alcalins, ions halogénures. Les impuretés des liquides ioniques sont responsables d'une surface des nanoparticules bimétalliques contaminées.

Avantageusement, la composition selon l'invention ne comprend pas de solvant organique, habituellement utilisé pour solubiliser les précurseurs organométalliques. Ceci contribue à l'obtention de nanoparticules bimétalliques nues.

Selon l'invention, le liquide ionique est choisi parmi du 1-Butyl-3-methylimidazolium bis(trifluorométhylsulfonyl)imide (C₁C₄ImNTf₂), du 1-hexyl-3-methylimidazolium bis(trifluorométhylsulfonyl)imide (C₁C₆ImNTf₂), ou du 1-octyl-3-methylimidazolium bis(trifluorométhylsulfonyl)imide ((C₁C₈ImNTf₂),).

Les précurseurs organométalliques comprennent préférentiellement des métaux de transition, par exemple Ruthénium (Ru), Tantale (Ta), Cuivre (Cu), Nickel (Ni), Manganèse (Mn), Platine (Pt).

A titre d'exemple des nanoparticules bimétalliques formées peuvent comprendre les couples de létaux suivants : ruthénium-tantale ou ruthénium-cuivre ou ruthénium-platine ou nickel-cuivre ou manganèse-cuivre.

A savoir que le précurseur organométallique à vitesse de décomposition la plus grande est citée en premier.

### EXEMPLES

### *Synthèse de nanoparticules bimétalliques selon l'invention :

Un premier précurseur organométallique de ruthénium : RuCODCOT et un deuxième précurseur organométallique de cuivre : MesytilCu sont mis en solution dans un liquide ionique : (C₁C₄ImNTf₂), dans des proportions variables. La concentration totale est de 5x10⁻²M. La solution est portée à 100°C sous 0,9 MPa de dihydrogène pendant 4 heures. Les deux précurseurs organométalliques sont réduits en métal s'organisant sous forme de nanoparticules bimétalliques. Les nanoparticules bimétalliques sont observées par Microscopie Electronique en Transmission (TEM en anglais) pour déterminer la distribution de taille, par Spectroscopie de pertes d'énergie d'électrons (EELS en anglais) et spectroscopie de photoélectrons X (XPS en anglais).

Dans ces conditions de synthèse, le ruthénium seul et le cuivre seul conduisent respectivement à des nanoparticules de 6+/-4 et 5+/-1 nm. Lors que les deux éléments sont présents simultanément, la taille des nanoparticules bimétalliques chute à 2-3nm.

En image EELS lorsque le cuivre n'est pas encore décomposé, seul le ruthénium est visible. Une fois que le cuivre commence à ce décomposer, le cuivre devient visible, les objets visualisés sont plus gros ce qui indique bien que le cuivre est situé en périphérie des nanoparticules en cours de formation.

### * Mesure de la vitesse de décomposition d'un précurseur organométallique :

Selon une possibilité, la vitesse peut être déterminée par suivi visuel. En effet, lors de la formation de nanoparticules, la solution devient noire de manière progressive.

On met en solution un précurseur organométallique dans un liquide ionique et on procède à une étape de transformation selon l'invention. Le suivi de la couleur de la solution permet de déterminer la vitesse de décomposition du précurseur organométallique.

Par exemple, du RuCODCOT est mis en solution dans le liquide ionique : (C₁C₄ImNTf₂). Cette solution est soumise à une étape de transformation soit à 100°C sous une pression de l'ordre de 0,4 MPa. Un suivi visuel est effectué par exemple par caméra ou photographie. Il a pu être déterminé que la décomposition du précurseur organométallique et donc la formation de nanoparticules de Ruthénium était réalisée dès 30 minutes environ.

Le même procédé est suivi pour mesurer la vitesse de décomposition du précurseur organométallique MesytilCu. Avec ce précurseur organométallique, il a pu être déterminé que la décomposition du précurseur organométallique et donc la formation de nanoparticules de cuivre était réalisée après 6 heures environ.

Le rapport des vitesses (tauOM2/tauOM1) est donc de l'ordre de 12 pour ce couple de précurseurs organométalliques.

Suivant une autre possibilité, la mesure de la vitesse de décomposition d'un précurseur organométallique peut également être réalisée par un suivi du dosage des hydrocarbures présents dans le mélange réactionnel.

Un précurseur organométallique est mis en solution dans un liquide ionique et soumis à une étape de transformation. A différents temps, la réaction est arrêtée et le milieu réactionnel est analysé. Le milieu réactionnel est placé sous vide pour dégazer les composés. Les composés volatiles sont condensés puis analysés par chromatographie en phase gazeuse.

Plus la quantité d'hydrocarbures présente dans le milieu est importante, plus la décomposition du précurseur organométallique est avancée.

## Revendications

1. Composition pour la synthèse de nanoparticules bimétalliques **caractérisée en ce qu'**elle est comprend un premier précurseur organométallique et un deuxième précurseur organométallique et une solution de liquide ionique contenant lesdits premier et deuxième précurseurs, le premier et le deuxième précurseurs organométalliques étant choisis de sorte à avoir des vitesses de décomposition différentes.

2. Composition selon la revendication précédente dans laquelle le rapport des vitesses est au moins égal à 2.

3. Composition selon l'une quelconques des revendications précédentes laquelle ne comprend pas de stabilisant.

4. Composition selon l'une quelconques des revendications précédentes laquelle est constituée d'un premier précurseur organométallique et d'un deuxième précurseur organométallique et d'une solution de liquide ionique contenant le premier et le deuxième précurseur.

5. Composition selon l'une quelconques des revendications précédentes dans laquelle le premier précurseur organométallique et le deuxième précurseur organométallique sont différents et comprennent un métal choisis parmi : Ruthénium (Ru), Tantale (Ta), Cuivre (Cu), Nickel (Ni), Manganèse (Mn), Platine (Pt).

6. Composition selon l'une quelconques des revendications précédentes dans laquelle la quantité du deuxième précurseur organométallique est comprise entre 0,5 et 5% de la quantité du premier précurseur organométallique.

7. Composition selon l'une quelconques des revendications précédentes dans laquelle le liquide ionique est choisi parmi (C₁C₄ImNTf₂), (C₁C₆ImNTf₂), ou (C₁C₈ImNTf₂).

8. Composition selon l'une quelconques des revendications dans laquelle le liquide ionique est pur.

9. Procédé de synthèse de nanoparticules bimétalliques **caractérisé par le fait qu'**il comprend une étape de transformation d'une composition pour la synthèse de nanoparticules bimétalliques comprenant un premier précurseur organométallique et un deuxième précurseur organométallique et une solution de liquide ionique contenant lesdits premier et deuxième précurseurs, le premier et le deuxième précurseurs organométalliques étant choisis de sorte à avoir des vitesses de décomposition différentes, sous une température comprise entre 0 et 150°C et sous pression de dihydrogène comprise entre 0.1 et 10 MPa pendant un temps compris entre 0,5 et 72 h jusqu'à l'obtention d'une suspension de nanoparticules bimétalliques.

10. Procédé selon la revendication précédente dans lequel la température est sensiblement de 100°C.

11. Procédé selon l'une quelconque des deux revendications précédentes dans lequel la pression de dihydrogène est sensiblement de 0,9 MPa.

12. Procédé selon l'une quelconque des trois revendications précédentes dans lequel la durée de l'étape de transformation est de 4 heures.

13. Procédé selon l'une quelconque des quatre revendications précédentes dans lequel l'étape de transformation comprend la décomposition du premier précurseur organométallique en atomes métalliques puis la réduction des atomes métalliques pour former des nuclei et la décomposition du deuxième précurseur organométallique à la surface desdits nuclei.

14. Suspension de nanoparticules bimétalliques obtenues selon le procédé selon l'une quelconque de revendications 9 à 13 dans laquelle les nanoparticules bimétalliques synthétisées présentent une structure coeur-coquille et sont Ruthénium-Tantale ou Ruthénium-Cuivre ou Ruthénium-Platine ou Nickel-Cuivre ou Manganèse-Cuivre et ont une taille comprise entre 2 et 5 nm.

15. Suspension de nanoparticules bimétalliques selon la revendication précédente dans laquelle les nanoparticules bimétalliques sont libres de contamination de surface.

## Patentansprüche

1. Zusammensetzung für die Synthese von bimetallischen Nanopartikeln, **dadurch gekennzeichnet, dass** sie einen ersten metallorganischen Vorläufer und einen zweiten metallorganischen Vorläufer und eine Lösung einer ionischen Flüssigkeit umfasst, die den ersten und zweite Vorläufer enthält, wobei der erste und der zweite metallorganische Vorläufer derart ausgewählt sind, dass sie unterschiedliche Zersetzungsgeschwindigkeiten aufweisen.

2. Verfahren nach dem vorhergehenden Anspruch, wobei das Verhältnis der Geschwindigkeiten mindestens gleich 2 ist.

3. Zusammensetzung nach einem der vorhergehenden Ansprüche, die keinen Stabilisator umfasst.

4. Zusammensetzung nach einem der vorhergehenden Ansprüche, die aus einem ersten metallorganischen Vorläufer und einem zweiten metallorganischen Vorläufer und einer Lösung einer ionischen Flüssigkeit gebildet ist, die den ersten und den zweiten Vorläufer enthält.

5. Zusammensetzung nach einem der vorhergehenden Ansprüche, wobei der erste metallorganische Vorläufer und der zweite metallorganische Vorläufer unterschiedlich sind und ein Metall umfassen, das ausgewählt ist aus: Ruthenium (Ru), Tantal (Ta), Kupfer (Cu), Nickel (Ni), Mangan (Mn), Platin (Pt).

6. Zusammensetzung nach einem der vorhergehenden Ansprüche, wobei die Menge des zweiten metallorganischen Vorläufers zwischen 0,5 und 5 % der Menge des ersten metallorganischen Vorläufers beträgt.

7. Zusammensetzung nach einem der vorhergehenden Ansprüche, wobei die ionische Flüssigkeit ausgewählt ist aus (C₁C₄ImNTf₂) , (C₁C₆ImNTf₂) oder (C₁C₈ImNTf₂).

8. Zusammensetzung nach einem der vorhergehenden Ansprüche, wobei die ionische Flüssigkeit rein ist.

9. Verfahren zur Synthese von bimetallischen Nanopartikeln, **dadurch gekennzeichnet, dass** sie einen Schritt der Transformation einer Zusammensetzung für die Synthese von bimetallischen Nanopartikeln, die einen ersten metallorganischen Vorläufer und einen zweiten metallorganischen Vorläufer und eine Lösung einer ionischen Flüssigkeit umfasst, die den ersten und zweite Vorläufer enthält, wobei der erste und der zweite metallorganische Vorläufer derart ausgewählt werden, dass sie unterschiedliche Zersetzungsgeschwindigkeiten aufweisen, bei einer Temperatur zwischen 0 und 150 °C und unter Diwasserstoffdruck zwischen 0,1 und 10 MPa für eine Zeit zwischen 0,5 und 72 Stunden bis zum Erhalten von einer Suspension von bimetallische Nanopartikeln aufweist.

10. Verfahren nach dem vorhergehenden Anspruch, wobei die Temperatur im Wesentlichen 100 °C beträgt.

11. Verfahren nach einem der vorhergehenden Ansprüche, wobei der Diwasserstoffdruck im Wesentlichen 0,9 MPa beträgt.

12. Verfahren nach einem der drei vorhergehenden Ansprüche, wobei die Dauer des Schrittes der Transformation 4 Stunden beträgt.

13. Verfahren nach einem der vier vorhergehenden Ansprüche, wobei der Schritt der Transformation das Zersetzen des ersten metallorganischen Vorläufers in Metallatome und dann das Reduzieren der Metallatome, um Nuklei zu bilden, und das Zersetzen des zweiten metallorganischen Vorläufers auf der Oberfläche der Nuklei aufweist.

14. Suspension von bimetallischen Nanopartikeln, die nach dem Verfahren nach einem der vorhergehenden Ansprüche 9 bis 13 erhalten werden, wobei die synthetisierten bimetallischen Nanopartikel eine Kern-Schale-Struktur aufweisen und Ruthenium-Tantal oder Ruthenium-Kupfer oder Ruthenium-Platin oder Nickel-Kupfer oder Mangan-Kupfer sind und eine Größe zwischen 2 und 5 nm aufweisen.

15. Suspension von bimetallischen Nanopartikeln nach dem vorhergehenden Anspruch, wobei die bimetallischen Nanopartikel frei von Oberflächenverunreinigung sind.

## Claims

1. A composition for synthesizing bimetallic nanoparticles, **characterized in that** it comprises a first organometallic precursor and a second organometallic precursor and an ionic liquid solution containing the said first and second precursors, the first and second organometallic precursors being chosen so as to have different decomposition rates.

2. A composition according to the preceding claim, wherein the rate ratio is at least equal to 2.

3. A composition according to any one of the preceding claims, which does not comprise stabilizer.

4. A composition according to any one of the preceding claims, which consists of a first organometallic precursor and a second organometallic precursor and an ionic liquid solution containing the first and second precursors.

5. A composition according to any one of the preceding claims, wherein the first organometallic precursor and a second organometallic precursor are different and comprise a metal chosen from among: ruthenium (Ru), tantalum (Ta), copper (Cu), nickel (Ni), manganese (Mn), platinum (Pt).

6. A composition according to any one of the preceding claims, wherein the amount of the second organometallic precursor is between 0.5 and 5% of the amount of the first organometallic precursor.

7. A composition according to any one of the preceding claims, wherein the ionic liquid is chosen from among (C₁C₄ImNTf₂), (C₁C₆ImNTf₂) or (C₁C₈ImNTf₂).

8. A composition according to any one of the preceding claims, wherein the ionic liquid is pure.

9. A method for synthesizing bimetallic nanoparticles, **characterized by** the fact that it comprises a step of transforming a composition for synthesizing bimetallic nanoparticles comprising a first organometallic precursor and a second organometallic precursor and an ionic liquid solution containing the said first and second precursors, the first and second organometallic precursors being chosen so as to have different decomposition rates, under a temperature between 0 and 150°C and under hydrogen pressure between 0.1 and 10 MPa for a time between 0.5 and 72 h, until a suspension of bimetallic nanoparticles is obtained.

10. A method according to the preceding claim, wherein the temperature is substantially 100°C.

11. A method according to any one of the two preceding claims, wherein the hydrogen pressure is substantially 0.9 MPa.

12. A method according to any one of the three preceding claims, wherein the duration of the transformation step is 4 hours.

13. A method according to any one of the four preceding claims, wherein the transformation step comprises the decomposition of the first organometallic precursor into metal atoms then the reduction of the metal atoms to form nuclei and the decomposition of the second organometallic precursor at the surface of the said nuclei.

14. A suspension of bimetallic nanoparticles obtained according to the method according to any one of claims 9 to 13, wherein the synthesized bimetallic nanoparticles have a core-and-shell structure and are ruthenium-tantalum or ruthenium-copper or ruthenium-platinum or nickel-copper or manganese-copper and the size of which is between 2 and 5 nm.

15. A suspension of bimetallic nanoparticles according to any one of the three preceding claims, wherein the bimetallic nanoparticles are free of surface contamination.
